# EUROPÄISCHE PATENTSCHRIFT

(11) **EP 0 947 480 B1**
(45) Veröffentlichungstag und Bekanntmachung des Hinweises auf die Patenterteilung: **21.03.2001**
(21) Anmeldenummer: 98101229.7
(22) Anmeldetag: 24.01.1998
(51) Int. Cl.: C04B 20/10, C04B 26/26, C04B 40/06, E04F 15/12, C08L 95/00

(54) **Verfahren zur Herstellung von Unterböden als Dämmschicht für Estriche bei Alt- und Neubauten**
Process for making subfloors as insulation layer for floors in new and old buildings
Procédé de fabrication de dalles comme couche d'isolation pour planchers dans des nouveaux ou vieux bâtiments

(43) Veröffentlichungstag der Anmeldung: 06.10.1999
(73) Patentinhaber: Dipl.-Ing. Hans Goidinger Bau-und Leichtbeton Gesellschaft m.b.H., 6112 Wattens (AT)
(72) Erfinder: Bruckbauer, Alexander, 5280 Braunau a.I. (AT); Goidingeeer, Arno Mag., 6060 Tulfes bei Hall i.T. (AT)
(74) Vertreter: Schneck, Herbert, Dipl.-Phys., Dr.

(56) Entgegenhaltungen:
- DE-A- 2 049 248
- DE-U- 9 312 916
- DE-U- 9 410 620
- DE-U- 29 708 419

## Beschreibung

Die Erfindung betrifft ein Verfahren zur Herstellung von Unterböden als Dämmschicht für Estriche bei Alt- und Neubauten, wobei der Unterboden durch ein mittels eines Bindemittels verbundenes Schaumstoffgranulats gebildet wird.

Ein solcher Unterboden dient dazu, den Estrich mit seiner glatten Gebrauchsoberfläche aufzunehmen und zunächst für eine Schalldämmung gegenüber der tragenden Deckenkonstruktion, z. B. einer Betondecke, zu sorgen und gegebenenfalls auf dieser tragenden Deckenkonstruktion verlegte Installationen zu umgeben, um für den dünneren Estrich eine ebene Grundlage zu bilden.

Ein solcher Unterboden ist aus dem deutschen Gebrauchsmuster G 93 12 916.5 bekannt, wobei der Unterboden aus einem bitumengebundenen Schaumstoffgranulat besteht. Um diesen Unterboden an der Baustelle zu verarbeiten, wird dieser in Komponenten in einem Mehrkammersilo zur Baustelle transportiert. Dort werden die Komponenten anschließend gemischt und mittels einer Estrichpumpe zur Verarbeitungsstelle transportiert. Das in das jeweilige Stockwerk beförderte Material wird mit einem Eisenrechen verteilt und mit einer Latte abgezogen. Durch die Abgabe von Feuchtigkeit an die Umgebung nimmt die Viskosität des Unterbodenmaterials mit der Zeit ständig zu, so daß nach einer gewissen Zeit der Unterboden eine feste Einheit bildet. Bei größeren benötigten Mengen von Unterbodenmaterial erfolgt eine Nachlieferung mittels eines Silofahrzeuges.

Bei diesem baustellenseitigen Herstellverfahren des Unterbodenmaterials ist es von Nachteil, daß nach dem Mischvorgang ein unverzügliches Verarbeiten des Unterbodenmaterials erforderlich ist, da der Unterboden mit zunehmender Zeit erstarrt und somit ein vollständiges Ausfüllen des Unterbodenbereichs zunehmend schwieriger wird. Das hat zur Konsequenz, daß die Arbeitsorganisation auf der Baustelle aufgrund der zeitbegrenzten Verarbeitungsfähigkeit des Unterbodenmaterials nicht sehr flexibel gestaltbar ist.

Unter wirtschaftlichen Aspekten ist ein baustellenseitiger Mischvorgang des Unterbodenmaterials ungünstig, da eine zusätzliche Mischeinrichtung an der Baustelle erforderlich ist. Zudem beansprucht das übliche Verfahren ein Fachpersonal, das das richtige Mischverhältnis erzeugt und kontrolliert.

Aus DE 94 10 620 ist eine Fußbodenausgleichsmasse bekannt, welche als Grundmaterial einen Leichtbaustoff und Bindemittel aus Kunstharz, Zement, Füllstoffe und Wasser enthält, wobei alle Bestandteile mit Ausnahme des Wassers als Trockenmasse vorliegen.

Es ist Aufgabe der Erfindung, ein besonders wirtschaftliches, verarbeitungstechnisch vorteilhaft handbares und hinsichtlich der Arbeitsorganisation günstiges Verfahren zur Herstellung eines Unterbodens der gattungsgemäßen Art zu schaffen, in dem ein baustellenseitiges Mischen vollständig verzichtbar wird.

Diese Aufgabe wird dadurch gelöst, daß das wasserfreie Bindemittel im trockenen Zustand eine niedrige Viskosität und bei Aufnahme von Feuchtigkeit eine höhere Viskosität zur Ausbildung eines hinreichend festen Verbundes aufweist, das Schaumstoffgranulat von dem Bindemittel herstellerseitig in einem Mischvorgang ummantelt wird, das ummantelte Schaumstoffgranulat anschließend feuchtigkeitsdicht verpackt wird und baustellenseitig das ummantelte Schaumstoffgranulat ausgepackt und niveaugerecht als Unterbodenschicht aufgetragen wird.

Ein Vorteil des durch das erfindungsgemäße Verfahren erzeugten Unterbodens besteht darin, daß das Bindemittel kurz nach dem Öffnen der luftdichten Verpackung eine niedrige Viskosität aufweist, so daß ein leichtes Verteilen des Schaumstoffgranulats möglich ist, und daß durch die bloße Anwesenheit der Luftfeuchtigkeit die Viskosität des Bindemittels derart stark erhöht wird, so daß das Dämmstoffgranulat hinreichend fest gebunden wird.

Es ist anzumerken, daß bei sehr trockener Luft, wie es in kalten Wintermonaten der Fall sein kann, baustellenseitig für die Erhöhung der Luftfeuchtigkeit gesorgt werden kann, indem der bereits verlegte Unterboden einfach mit Wasser besprüht wird.

Die für das Verfahren zum Herstellen des Unterbodens wesentliche Bindemittelummantelung ist derart beschaffen, daß ein Zusammenkleben des Granulats auch bei längeren Lagerungszeiträumen verhindert wird. Das Abfließen des Bindemittels von dem Schaumstoffgranulat wird dadurch vermieden, daß die Komponenten nacheinander schichtweise das Granulat umantelnd aufgebracht werden.

Bei dem erfindungsgemäßen Verfahren zur Herstellung von Unterböden kann das bereits vermischte und luftdichtverpackte Unterbodenmaterial zeitunabhängiger einsetzbar auf der Baustelle gelagert werden. Auf diese Weise ist es möglich, eine flexiblere Arbeitsorganisation auf den Baustellen zu gewährleisten. Da der Mischvorgang der Komponenten für den Unterboden von dem Hersteller fachgemäß durchgeführt wird, braucht das verpackte Unterbodenmaterial nur noch geöffnet werden, um nach dem bekannten Verarbeitungsverfahren für Unterböden verteilt zu werden.

Ein bevorzugtes Beispiel für ein erfindungsgemäßes Bindemittel umfaßt folgende Komponenten: Bitumen, mineralische Zuschläge, wie Steinmehl, Gipsmehl oder Kalkmehl, mit Korngrößen kleiner 0,1 mm, viskositätsherabsetzende Fluxöle, wie Rapsöl, Tallöl oder deren Derivate und granuliertes Naturgestein, wie Kalk-, Dolomit-, Diabassand, vorzugsweise in einer Korngröße von 0,1 bis 1 mm. Diese Bindemittelkomponenten sind völlig ungiftig und verhalten sich umweltneutral. Zur Verbesserung der Abstützungseffekte und damit zur Festigkeitserhöhung des fertigen Unterbodens werden dem Bindemittel natürliche, mineralische Zuschlagstoffe zugesetzt.

### Ausführungsbeispiel:

- Styroporgranulat entsprechender Kornabstufung, abgestimmt auf die Schichtdicke des Unterbodens zwischen 0 und 25 mm Korngröße: 300 bis 1000 Liter
- Bitumen, vorzugsweise Straßenbaubitumen oder Industriebitumen mit Erweichungspunkten Ring und Kugel zwischen 30 und 110° C: 5 bis 20 kg
- Steinmehl, Gipsmehl, Kalkmehl oder sonstige mineralische Zuschläge mit Korngrößen kleiner 0,1 mm: 5 bis 15 kg
- Viskositätsherabsetzende Fluxöle auf der Basis natürlicher Stoffe, welche bitumenweichmachende Eigenschaften aufweisen, beispielsweise Rapsöl, Tallöl oder deren Derivate: 5 bis 15 kg
- Granuliertes Naturgestein, vorzugsweise 0,1 bis 1 mm Korngröße, wie Kalk-, Dolomit-, Diabassand: 10 bis 30 kg

Die beschriebenen Stoffe werden im Zuge des erfindungsgemäßen Verfahrens herstellerseitig in üblichen Zwangsmischern mit dem Styroporgranulat, das eine Korngröße von 0 bis 25 mm aufweist, in der Regel in der angeführten Reihenfolge durch schrittweises Zugeben der einzelnen Komponenten in den Mischer gemischt. So erfolgt ein schichtweises Aufziehen der einzelnen Bindemittelbestandteile auf das Granulat.

Unmittelbar nach dem Vermischen wird das Material in luftdicht verschließbare Gebinde abgefüllt. Die Öffnung des Gebindes erfolgt erst baustellenseitig. Bei der Verarbeitung an der Baustelle muß lediglich das Material mit geeigneten Vorrichtungen, gemäß dem Stand der Bautechnik, niveaugerecht verteilt werden.

Das Ergebnis des erfindungsgemäßen Verfahrens ist ein wirtschaftlich und leicht herstellbarer, fugenloser, trittschalldämmender und wärmeisolierender Unterboden, der als Basis für herkömmliche Estriche verwendbar ist. Da der Bindemittelanteil geringer gehalten werden kann, ist im Vergleich zu bekannten Unterböden eine bessere Trittschalldämmung erzielbar. Der geringe Feuchtigkeitsanteil des erfindungsgemäßen Unterbodens ermöglicht auch einen Weiterbau mit Trockenelementen, wie Spanplatten.

## Patentansprüche

1. Verfahren zur Herstellung von Unterböden als Dämmschicht für Estriche bei Alt- und Neubauten, wobei der Unterboden gebildet wird durch ein mittels eines Bindemittels verbundenem Schaumstoffgranulat, **dadurch gekennzeichnet, daß**
- das Bindemittel im trockenen, wasserfreien Zustand eine niedrige Viskosität und bei Aufnahme von Feuchtigkeit eine höhere Viskosität zur Ausbildung eines hinreichend festen Verbundes aufweist,
- das Schaumstoffgranulat von dem Bindemittel herstellerseitig in einem Mischvorgang ummantelt wird,
- das ummantelte Schaumstoffgranulat anschließend luftdicht verpackt wird und
- baustellenseitig das ummantelte Schaumstoffgranulat ausgepackt und niveaugerecht als Unterbodenschicht aufgetragen wird.

2. Verfahren nach Anspruch 1, **dadurch gekennzeichnet, daß** zur Viskositätserhöhung nach dem Auftragen des ummantelten Schaumstoffgranulats Wasser zugegeben wird.

3. Verfahren nach Anspruch 1, **dadurch gekennzeichnet, daß** die Bindemittel-Komponenten umfassen
- Bitumen und
- Mineralische Zuschläge, wie Steinmehl, Gipsmehl oder Kalkmehl, mit Korngrößen < 0,1 mm und
- viskositätsherabsetzende Fluxöle, wie Rapsöl, Tallöl oder deren Derivate und
- granuliertes Naturgestein, wie Kalk-, Dolomit-, Diabassand, vorzugsweise in einer Korngröße von 0,1 bis 1 mm.

4. Verfahren nach Anspruch 3, **dadurch gekennzeichnet, daß** die Komponenten nacheinander schichtweise das Granulat ummantelnd aufgebracht werden.

5. Verfahren nach Anspruch 1, **dadurch gekennzeichnet, daß** das Granulat eine Korngröße von 0 bis 25 mm aufweist.

6. Verfahren nach Anspruch 1, **dadurch gekennzeichnet, daß** der Bitumen Straßenbaubitumen oder Industriebitumen mit Erweichungspunkten Ring und Kugel zwischen 30 und 110°C ist.

## Claims

1. A method of producing sub-floors as an insulation layer for floorings in old and new buildings, the sub-floor being formed by foam pellets bonded by means of a binder, **characterized**
- **in that** the binder, in a dry anhydrous condition, has a low viscosity and, upon absorption of moisture, a higher viscosity for a sufficiently solid bond to be obtained;
- in that, at the manufacturer, the foam pellets are enveloped by the binder in a mixing operation;
- in that the enveloped foam pellets are then packed in an airtight manner; and
- in that, at site, the enveloped foam pellets are unpacked and applied and leveled in the form of a sub-floor layer.

2. A method according to claim 1, **characterized in that** water is added after application of the enveloped foam pellets for increase of viscosity.

3. A method according to claim 1, **characterized in that** the binder components comprise
- bitumen; and
- mineral aggregates such as rock, plaster or lime powder of grain sizes < 0.1 mm; and
- viscosity-reducing flux oils such as rape-seed oil, tall oil or derivatives thereof; and
- granulated natural rock such as lime sand, dolomite sand, greenstone sand, preferably of a grain size of 0.1 to 1 mm.

4. A method according to claim 3, **characterized in that** the components are applied successively in layers, enveloping the pellets.

5. A method according to claim 1, **characterized in that** the pellets have a grain size of 0 to 25 mm.

6. A method according to claim 1, **characterized in that** the bitumen is road bitumen or industrial bitumen of softening temperatures ring-and-ball ranging between 30 and 110°C.

## Revendications

1. Procédé de fabrication de dalles servant de couches isolantes pour planchers dans des constructions anciennes et neuves, la dalle étant formée par un granulat en matériau cellulaire aggloméré par un liant, caractérisé en ce que
- le liant présente, à l'état sec déshydraté, une faible viscosité et, après absorption d'humidité, une viscosité plus élevée pour former un composite à résistance mécanique suffisante,
- chez le fabricant, le granulat en matériau cellulaire est enrobé de liant lors d'une opération de mélange,
- le granulat en matériau cellulaire enrobé est ensuite emballé de manière étanche à l'air et
- sur le chantier, le granulat en matériau cellulaire enrobé est déballé et répandu au niveau voulu sous la forme d'une couche de dalle.

2. Procédé selon la revendication 1, caractérisé en ce que, pour augmenter la viscosité, de l'eau est ajoutée une fois que le granulat en matériau cellulaire enrobé a été répandu.

3. Procédé selon la revendication 1, caractérisé en ce que les composants du liant sont
- du bitume et
- des additifs minéraux, tels que de la pierre pulvérisée, du plâtre pulvérisé ou du calcaire pulvérisé, avec des granulométries < 0,1 mm, et
- des huiles de fluxage diminuant la viscosité, telles que huile de colza, tallôl ou leurs dérivés, et
- de la roche naturelle granulée, telle que sable de calcaire, de dolomie, de diabase, de préférence avec une granulométrie de 0,1 à 1 mm.

4. Procédé selon la revendication 3, caractérisé en ce que les composants sont mis en oeuvre les uns après les autres en enrobant le granulat par couches.

5. Procédé selon la revendication 1, caractérisé en ce que le granulat présente une granulométrie de 0 à 25 mm.

6. Procédé selon la revendication 1, caractérisé en ce que le bitume est un bitume routier ou un bitume industriel avec un point de ramollissement à anneau et cône compris entre 30 et 110 °C.
